# EUROPÄISCHE PATENTSCHRIFT

(11) **EP 1 798 421 B1**
(45) Veröffentlichungstag und Bekanntmachung des Hinweises auf die Patenterteilung: **23.06.2010**
(21) Anmeldenummer: 06024357.3
(22) Anmeldetag: 24.11.2006
(51) Int. Cl.: F04D 29/58, H02K 9/20

(54) **Hochdruckventilator**
High-pressure ventilator
Ventilateur à haute pression

(30) Priorität: 16.12.2005 DE 102005060329
(43) Veröffentlichungstag der Anmeldung: 20.06.2007
(73) Patentinhaber: Dietz-motoren GmbH & Co. KG, 73265 Dettingen/Teck (DE)
(72) Erfinder: Barth, Andreas, 74538 Rosengarten (DE); Strauss, Bernd, 72800 Eningen (DE)
(74) Vertreter: Ruckh, Rainer Gerhard

(56) Entgegenhaltungen:
- EP-A- 0 353 832
- EP-A- 1 318 307
- DD-A1- 252 485
- JP-A- 8 033 255

## Beschreibung

Die Erfindung betrifft einen Hochdruckventilator gemäß dem Oberbegriff des Anspruchs 1.

Ein derartiger Hochdruckventilator ist aus der DE 698 17 150 T2 bekannt. Der dort beschriebene Hochdruckventilator umfasst einen Antrieb in Form eines Elektromotors, an dessen stirnseitigen Enden jeweils ein Laufrad angeordnet ist. Die in Laufradgehäusen integrierten Laufräder werden über die Welle des Elektromotors angetrieben.

Der Elektromotor ist in einem Motorgehäuse integriert, welches eine im Wesentlichen zylindrische Form aufweist. Zur Kühlung des Motors sind auf der Mantelfläche des Motorgehäuses in axialer Richtung, das heißt parallel zur Welle des Motors verlaufende Kühlrippen vorgesehen. An einem Ende der Welle des Motors sitzt ein Lüfterflügel auf. Der Lüfterflügel wird zusammen mit den Laufrädern mittels des Motors angetrieben und bläst Luft zur Kühlung des Motors in Richtung der Kühlrippen.

Ein wesentlicher Nachteil einer derartigen Kühlanordnung besteht darin, dass der Lüfterflügel auf der Welle des Motors aufsitzt und mit diesem zusammen mit den Laufrädern angetrieben werden muss.

Durch diese Konstruktion wird die maximale Motordrehzahl und damit letztlich der Wirkungsgrad des Hochdruckventilators in unerwünschter Weise reduziert. Dies beruht darauf, dass zum Antrieb des Lüfterflügels ein erheblicher Leistungsbedarf des Motors erforderlich ist. Die zum Antrieb des Lüfterflügels benötigte Leistung steht dann nicht mehr zum Antrieb der Laufräder zur Verfügung. Weiterhin begrenzt der Anbau des Lüfterflügels auf der Welle des Motors dessen Leistungsparameter hinsichtlich der Drehzahlgrenze des verwendeten Lagersystems für die Welle sowie der zulässigen Fliehkraftbeanspruchung des Rotors des Motors.

Schließlich ist bei dieser Anordnung nachteilig, dass durch den zusätzlich auf der Welle des Motors angebrachten Lüfterflügel die Baugröße des Hochdruckventilators in axialer Richtung der Welle vergrößert wird. Dadurch treten verstärkt Schwingungen, insbesondere Biegeschwingungen, auf, welche bei höheren Drehzahlen Eigenresonanzen aufweisen. Dies bedeutet, dass derartige Schwingungseffekte ebenfalls zu einer unerwünschten Begrenzung der maximalen Drehzahl des Hochdruckventilators führen.

Die DE 689 11 411 T2 betrifft ein Belüftungssystem für ein Fahrzeug zum Zuführen von Umgebungsluft zur Innenseite des Fahrzeugs und zum Ausgeben von Luft von der Innenseite zur Außenseite des Fahrzeugs, mit einer Zuluftvorrichtung, einer Abluftvorrichtung und einer Antriebsvorrichtung, die jeweils Lufträume beinhalten. Die Zuluftvorrichtung weist einen Lüfter auf, der mit einem Ende einer Antriebswelle der Antriebsvorrichtung verbunden ist. Entsprechend weist die Abluftvorrichtung einen Lüfter auf, der mit dem anderen Ende der Antriebswelle verbunden ist. Die Antriebsvorrichtung ist im Pfad der von der Innenseite des Fahrzeugs zur Außenseite ausgeblasenen Luft angeordnet, wodurch die Antriebsvorrichtung durch Abluft kühlbar ist.

Die DE 12 26 498 A betrifft eine Kühlanordnung für geschlossene, oberflächengekühlte elektrische Maschinen, insbesondere für den Antrieb von Ladewinden auf Schiffen, mit über den ganzen Umfang des Maschinengehäuses verlaufenden ringförmigen Kühlrippen, die von einem Mantel umgeben sind, so dass Ringkanäle für die Führung der Kühlluft entstehen. Der Gehäusemantel setzt sich nach unten oder einer Seite hin in eine nach unten bzw. der betreffenden Seite offene Kammer fort, die durch eine Zwischenwand in je einen sich über die ganze Länge der Maschine erstreckenden Zuluft- und Abluftstutzen unterteilt ist, die ihrerseits an eine die ringförmigen Rippen am Gehäuse miteinander verbindende und die Ringkanäle im Bereich der Kammer begrenzende Längsrippe anschließt. In einem dieser Stutzen ist ein Tangentiallüfter angeordnet, der einen im wesentlichen gleichmäßig über die Länge der Maschine verteilten, die Ringkanäle gleichmäßig durchströmenden Kühlluftstrom erzeugt.

Die Druckschrift EP 0353832 wird als nächstliegender Stand der Technik angesehen.

Der Erfindung liegt die Aufgabe zugrunde, einen Hochdruckventilator der eingangs genannten Art bereitzustellen, welcher bei kleiner Bauform einen hohen Wirkungsgrad bei möglichst hoher erreichbarer Drehzahl aufweist.

Zur Lösung dieser Aufgabe sind die Merkmale des Anspruchs 1 und des Anspruchs 8 vorgesehen. Vorteilhafte Ausführungsformen und zweckmäßige Weiterbildungen der Erfindung sind in den Unteransprüchen beschrieben.

Ein wesentlicher Vorteil der Erfindung besteht darin, dass zur Kühlung des Motors des Hochdruckventilators keine Komponenten eingesetzt werden, die auf der Welle dieses Motors angeordnet sind und damit nicht von diesem mit angetrieben werden müssen. Dies bedeutet, dass bei dem erfindungsgemäßen Hochdruckventilator die Komponenten zur Kühlung des Motors nicht zu einer Reduzierung der maximal erreichbaren Drehzahl führen.

Da keine Komponenten zur Kühlung auf der Welle des Motors vorgesehen werden müssen, wird das Schwingungsverhalten des erfindungsgemäßen Hochdruckventilators durch diese Komponenten auch nicht nachteilig beeinflusst. Insbesondere werden damit Resonanzeffekte bei Auftreten von Biegeschwingungen bei höheren Drehzahlen vermieden, so dass der Hochdruckventilator auch bei hohen Drehzahlen betrieben werden kann.

Gemäß einer ersten Variante der Erfindung erfolgt eine Luftkühlung des Motors. Hierzu sind als Führungsmittel an der Mantelfläche des Motorgehäuses Kühlrippen vorgesehen, die mittels einer Fremdbelüftungseinheit seitlich am Motorgehäuse mit Luft als Kühlmedium beaufschlagt werden. Die Fremdbelüftungseinheit weist einen separaten Antrieb auf und belastet somit den Motor des Hochdruckventilators nicht. Besonders vorteilhaft ist die Fremdbelüftungseinheit als Querstromgebläse ausgebildet. Mit dieser Fremdbelüftungseinheit erfolgt somit eine sichere Entwärmung des Hochdruckventilators ohne dessen Wirkungsgrad oder dessen maximal erreichbare Drehzahl einzuschränken.

Damit ein möglichst großer Anteil des in der Fremdbelüftungseinheit generierten Luftstroms auf die Kühlrippen geführt wird, kann in einer vorteilhaften Ausführungsform ein Luftleitblech vorgesehen sein, welches an der Fremdbelüftungseinheit befestigt ist und sich über einen Teil der Mantelfläche des Motorgehäuses erstreckt, wobei dabei das Luftleitblech bevorzugt in einem konstanten Abstand zur Mantelfläche des Motorgehäuses angeordnet ist.

In einer alternativen vorteilhaften Ausgestaltung der Erfindung ist das Motorgehäuse mit den Laufrädern in einem schalldämmenden Kasten integriert, wobei die Fremdbelüftungseinheit in einer seitlichen Öffnung des Kastens gelagert ist. In diesem Fall können die Innenwände des Kastens so ausgeformt sein, dass diese Führungen zur Zufuhr des in der Fremdbelüftungseinheit generierten Luftstroms zu den Kühlrippen bilden. Auf diese Weise wird eine Doppelfunktion des Kastens erhalten, da dieser nicht nur zur Schalldämmung sondern auch zur Luftführung von der Fremdbelüftungseinheit zu den Kühlrippen dient.

Gemäß einer zweiten Variante der Erfindung erfolgt die Entwärmung des Hochdruckventilators, insbesondere des Motors, durch eine Flüssigkeitskühlung, insbesondere eine Wasserkühlung.

In diesem Fall sind als Führungsmittel für die Flüssigkeit als Kühlmedium an der Mantelfläche des Motorgehäuses Kühlwendeln vorgesehen. Die Kühlwendeln verlaufen bevorzugt im Wesentlichen in radialer Richtung an der Mantelfläche des Motorgehäuses, wobei sich die Kühlwendeln vorteilhaft über die gesamte Mantelfläche des Motorgehäuses erstrecken.

Besonders vorteilhaft bildet die Mantelfläche des Motorgehäuses die Innenwand eines Doppelrohres, welches konzentrisch zur Welle des Motors liegt. In der Außenwand dieses Doppelrohrs sind ein Einlass und ein Auslass für die Flüssigkeit vorgesehen. Die so ausgebildete Führung des Kühlmediums im Doppelrohr bildet eine Platz sparende und gleichzeitig dichte Führung für das Kühlmedium.

Auch bei dieser Variante sind auf der Welle des Motors keine Komponenten zur Kühlung des Hochdruckventilators vorgesehen, so dass auch in diesem Fall durch das Kühlsystem keine Reduzierung der maximal erzielbaren Drehzahl oder des Wirkungsgrads des Hochdruckventilators erhalten wird.

Die Erfindung wird im Nachstehenden anhand des in einer Zeichnung dargestellten Ausführungsbeispiels erläutert.

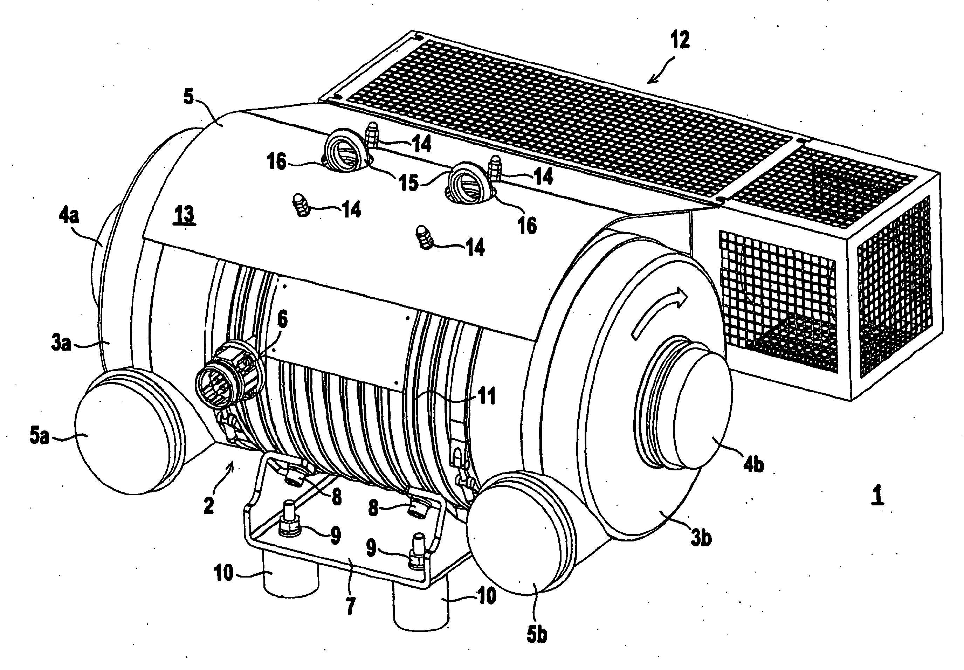

In der Zeichnung ist ein Ausführungsbeispiel eines Hochdruckventilators 1 dargestellt. Der Hochdruckventilator 1 weist einen als Elektromotor ausgebildeten Motor auf, der in einem im Wesentlichen hohlzylindrischen Motorgehäuse 2 angeordnet ist. Der Elektromotor weist eine nicht dargestellte Welle auf, die an den Stirnseiten des Motorgehäuses 2 aus diesem herausgeführt ist. Auf jedem der längsseitigen Enden der Welle sitzt ein Laufrad des Hochdruckventilators 1 auf, wobei jedes Laufrad in einem Laufradgehäuse 3a, b angeordnet ist. Wie aus der Zeichnung ersichtlich, schließen die Laufradgehäuse 3a, b an die Stirnseiten des Motorgehäuses 2 an. Auch die Laufradgehäuse 3a, b weisen eine im Wesentlichen hohlzylindrische Form auf, wobei die Außendurchmesser der Laufradgehäuse 3a, b im Wesentlichen dem Außendurchmesser des Motorgehäuses 2 entsprechen. Die auf der Welle drehfest gelagerten Laufräder werden mittels des Elektromotors angetrieben und in eine Drehbewegung versetzt.

Die Laufradgehäuse 3a, b weisen einen im Wesentlichen identischen Aufbau auf. Jedes Laufradgehäuse 3a, b weist dabei einen Lufteinlass 4a, b und einen Luftauslass 5a, b auf. Über den Lufteinlass 4a, b wird Umgebungsluft dem jeweiligen Laufrad zugeführt. Über den Luftauslass 5a, b kann Luft aus dem Laufradgehäuse 3a, b ausströmen. Die Lufteinlässe münden jeweils am stimseitigen Ende eines Laufradgehäuses 3a, b ein, so dass die über diese eingeströmte Luft zentral auf das jeweilige Laufrad geführt ist. Die Luftauslässe 5a, b münden seitlich am jeweiligen Laufradgehäuse 3a, b aus. Dabei münden die Luftauslässe 5a, b auf derselben Seite des Hochdruckventilators 1 aus.

Durch die beidseitige Lagerung der Laufräder am Motor entsteht ein Hochdruck-Doppelventilator mit hohen Leistungswerten. Insbesondere können mit derartigen Hochdruck-Doppelventilatoren hohe Druckanstiege realisiert werden, wobei diese dcnnoch eine kompaktc Bauform aufweisen.

Zum elektrischen Anschluss des Motors des Hochdruckventilators 1 ist ein Leistungsstecker 6 vorgesehen. Der Leistungsstecker 6 mündet seitlich an der Mantelfläche des Motorgehäuses 2 aus und zwar auf derselben Seite des Hochdruckventilators 1, an welcher auch die Luftauslässe 5a, b ausmünden. Anstelle des Leistungssteckers 6 kann auch ein aus dem Motorgehäuse 2 herausgeführtes Anschlusskabel vorgesehen sein.

Der Hochdruckventilator 1 sitzt auf einem Sockel 7 auf, welcher mit Schrauben 8 am Motorgehäuse 2 befestigt ist. Mittels weiterer Schrauben 9 sind an der Unterseite des Sockels 7 Gummipuffer 10 fixiert. Mit diesen Gummipuffern 10 wird der Hochdruckventilator 1 auf einer Unterlage befestigt. Typischerweise wird der Hochdruckventilator 1 mit den Gummipuffern 10 an einem Maschinengestell oder dergleichen fixiert. Durch die schwingungsdämpfende Wirkung der Gummipuffer 10 wird eine Übertragung von Schwingungen der Maschine auf den Hochdruckventilator 1 vermieden oder zumindest reduziert.

Zur Entwärmung des Hochdruckventilators 1, insbesondere dessen Motors, sind an der äußeren Mantelfläche des Motorgehäuses 2 in radialer Richtung verlaufende Kühlrippen 11 vorgesehen. Die Kühlrippen 11 erstrecken sich jeweils über den gesamten Umfang des Motorgehäuses 2. Bevorzugt sind die einzelnen Kühlrippen 11 identisch ausgebildet und äquidistant zueinander angeordnet.

Weiterhin weist der Hochdruckventilator 1 eine Fremdbelüftungseinheit 12 auf, die im vorliegenden Fall von einem Querstromgebläse gebildet ist. Die Fremdbelüftungseinheit 12 liegt seitlich zum Motorgehäuse 2 des Hochdruckventilators 1, wobei die Fremdbelüftungseinheit 12 einerseits und die Luftauslässe 5a, b andererseits auf gegenüberliegenden Seiten des Hochdruckventilators 1 angeordnet sind. In der Fremdbelüftungseinheit 12 wird als Kühlmedium ein Luftstrom generiert, der seitlich auf das Motorgehäuse 2 geblasen und so auf die Kühlrippen 11 geführt wird. Die Fremdbelüftungseinheit 12 ist mittels nicht dargestellten Befestigungsmitteln am Motorgehäuse 2 fixiert und bildet so mit den übrigen Komponenten des Hochdruckventilators 1 eine Baueinheit. Vorzugsweise erfolgt die Ankopplung der Fremdbelüftungseinheit 12 an das Motorgehäuse 2 wiederum über schwingungsdämpfende Elemente wie Gummipufferelemente.

Um den in der Fremdbelüftungseinheit 12 generierten Luftstrom gezielt und möglichst vollständig auf die Kühlrippen 11 zu führen, ist ein Luftleitblech 13 vorgesehen, welches an der Fremdbelüftungseinheit 12 fixiert ist. Ein Rand des Luftleitblechs 13 ist mit dem oberen Rand der Fremdbelüftungseinheit 12 fest verbunden. Das Luftleitblech 13 erstreckt sich von der Fremdbelüftungseinheit 12 in Richtung des Motorgehäuses 2. Dabei ist das Luftleitblech 13 so gebogen, dass das Luftleitblech 13 über ein Segment der Mantelfläche des Motorgehäuses 2 in konstantem Abstand zu dieser liegt. Wie aus der Zeichnung ersichtlich, deckt dabei das Luftleitblech 13 den oberen Teil der Mantelfläche des Motorgehäuses 2 ab.

Wie aus der Zeichnung weiter ersichtlich, ragen durch vier Bohrungen im Luftleitblech 13 die Köpfe von Fixierschrauben 14. Diese Fixierschrauben 14 dienen zur Lagefixierung des Luftleitblechs 13 im vorgegebenen Abstand zur Mantelfläche des Motorgehäuses 2. Die Fixierschrauben 14 münden an der Mantelfläche des Motorgehäuses 2 aus, wobei deren Längsachsen in radialer Richtung verlaufen. An den Ausmündungen am Motorgehäuse 2 sitzen nicht dargestellte schwingungsdämpfende Elemente wie Gummipufferelemente auf den Fixierschrauben 14 auf. Diese bilden Unterlagen, auf welchen das Luftleitblech 13 aufliegt.

Wie aus der Zeichnung weiter ersichtlich, weist der Hochdruckventilator 1 als Transporthilfen am Motorgehäuse 2 ausmündende ringförmige Ösen 15 auf, die durch kreisförmige Löcher 16 im Luftleitblech 13 hervorstehen.

Durch das Luftleitblech 13 wird der Luftstrom der Fremdbelüftungseinheit 12 entlang der Kühlrippen 11 geführt. Aufgrund seiner geringen Größe stört dabei der vom Motorgehäuse 2 hervorstehende Leistungsstrecker 6 den Kühlluftstrom nicht nennenswert.

Alternativ zur Konstruktion mit dem Luftleitblech 13 kann das Motorgehäuse 2 mit den Laufradgehäusen 3a, b in einem schalldämmenden Kasten integriert sein, wobei in diesem Fall die Fremdbelüftungseinheit 12 in einer seitlichen Öffnung des Kastens gelagert ist. Die Innenwände des Kastens sind dann so ausgebildet, dass diese in konstantem Abstand zur Mantelfläche des Motorgehäuses 2 verlaufen und so die Funktion des Luftleitblechs 13 übernehmen, das heißt, für eine gezielte Zufuhr des in der Fremdbelüftungseinheit 12 generierten Luftstroms zu den Kühlrippen 1 sorgen. Der Kasten weist somit nicht nur eine schalldämmende Wirkung auf, sondern dient zusätzlich zur Führung des Luftstroms der Fremdbelüftungseinheit 12.

## Patentansprüche

1. Hochdruckventilator mit einem in einem Motorgehäuse integrierten Motor, welcher eine in dessen Längsrichtung verlaufende Welle aufweist, mit zwei auf der Welle aufsitzenden und an die Stirnseiten des Motorgehäuses anschließenden Laufrädern, **dadurch gekennzeichnet, dass** an der Mantelfläche des Motorgehäuses (2) in radialer Richtung verlaufende Führungsmittel für ein Kühlmedium vorgesehen sind, welche mit einer seitlich an das Motorgehäuse (2) anschließenden Fremdbelüftungseinheit (12) mit Luft als Kühlmedium beaufschlagt sind.

2. Hochdruckventilator nach Anspruch 1, **dadurch gekennzeichnet, dass** die Fremdbelüftungseinheit (12) als Querstromgebläse ausgebildet ist.

3. Hochdruckventilator nach einem der Ansprüche 1 oder 2, **dadurch gekennzeichnet, dass** zur Zuleitung von Luft aus der Fremdbelüftungseinheit (12) auf die Kühlrippen (11) ein Luftleitblech (13) vorgesehen ist.

4. Hochdruckventilator nach Anspruch 3, **dadurch gekennzeichnet, dass** das Luftleitblech (13) an der Fremdbelüftungseinheit (12) fixiert ist.

5. Hochdruckventilator nach einem der Ansprüche 3 oder 4, **dadurch gekennzeichnet, dass** das Luftleitblech (13) über ein Segment der Mantelfläche des Motorgehäuses (2) in konstantem Abstand zu dieser angeordnet ist.

6. Hochdruckventilator nach Anspruch 1, **dadurch gekennzeichnet, dass** das Motorgehäuse (2) mit den Laufrädern in einem schalldämmenden Kasten integriert ist, wobei die Fremdbelüftungseinheit (12) in einer seitlichen Öffnung des Kastens gelagert ist.

7. Hochdruckventilator nach Anspruch 8, **dadurch gekennzeichnet, dass** die Innenwände des Kastens Führungen zur Zufuhr des in der Fremdbelüftungseinheit (12) generierten Luftstroms auf die Kühlrippen (11) bilden.

8. Hochdruckventilator mit einem in einem Motorgehäuse integrierten Motor, welcher eine in dessen Längsrichtung verlaufende Welle aufweist, mit zwei auf der Welle aufsitzenden und an die Stirnseiten des Motorgehäuses anschließenden Laufrädern, **dadurch gekennzeichnet, dass** an der Mantelfläche des Motorgehäuses (2) in radialer Richtung verlaufende Führungsmittel für ein seitliches Beaufschlagen mit einem Kühlmedium vorgesehen sind, wobei die Führungsmittel von an der Mantelfläche verlaufenden Kühlwendeln zur Führung einer Flüssigkeit als Kühlmedium gebildet sind.

9. Hochdruckventilator nach Anspruch 8, **dadurch gekennzeichnet, dass** die das Kühlmedium bildende Flüssigkeit Wasser ist.

10. Hochdruckventilator nach einem der Ansprüche 8 oder 9, **dadurch gekennzeichnet, dass** die Mantelfläche des Motorgehäuses (2) die Innenwand eines Doppelrohrs bildet.

11. Hochdruckventilator nach Anspruch 10, **dadurch gekennzeichnet, dass** in der Außenwand des Doppelrohrs ein Ein- und Auslass für die Flüssigkeit vorgesehen ist.

12. Hochdruckventilator nach einem der Ansprüche 1 bis 11, **dadurch gekennzeichnet, dass** die Laufräder im Laufradgehäuse (3a, b) integriert sind, welches an eine Stirnseite des Motorgehäuses (2) angeflanscht ist.

13. Hochdruckventilator nach Anspruch 12, **dadurch gekennzeichnet, dass** die Laufradgehäuse (3a, b) jeweils einen Lufteinlass (4a, b) und einen Luftauslass (5a, b) aufweisen.

14. Hochdruckventilator nach Anspruch 13, **dadurch gekennzeichnet, dass** die Laufradgehäuse (3a, b) mit den Laufrädern jeweils einen identischen Aufbau aufweisen.

15. Hochdruckventilator nach einem der Ansprüche 1 bis 14, **dadurch gekennzeichnet, dass** der Motor als Elektromotor ausgebildet ist.

16. Hochdruckventilator nach Anspruch 15, **dadurch gekennzeichnet, dass** zum elektrischen Anschluss des Motors am Motorgehäuse (2) ein Leistungsstecker (6) vorgesehen ist.

## Claims

1. High-pressure ventilator with a motor, which is integrated in a motor housing and which comprises a shaft extending in the longitudinal direction thereof, with two impellers seated on the shaft and connected with the ends of the motor housing, **characterised in that** provided at the circumferential surface of the motor housing (2) are guide means, which extend in a radial direction, for a coolant, which guide means are acted on with air as coolant by an external ventilation unit connected with the housing (2) at the side.

2. High-pressure ventilator according to claim 1, **characterised in that** the external ventilating unit (12) is constructed as a cross-flow fan.

3. High-pressure ventilator according to one of claims 1 and 2, **characterised in that** an air guide plate (13) is provided for conducting air from the external ventilating unit (12) to the cooling ribs (11).

4. High-pressure ventilator according to claim 3, **characterised in that** the air guide plate (13) is fixed to the external ventilating unit (12).

5. High-pressure ventilator according to one of claims 3 and 4, **characterised in that** the air guide plate (13) is arranged over a segment of the circumferential surface of the motor housing (2) at a constant spacing therefrom.

6. High-pressure ventilator according to claim 1, **characterised in that** the motor housing (2) together with the impellers is integrated in a sound-insulating box, wherein the external ventilating unit (12) is mounted in a lateral opening of the box.

7. High-pressure ventilator according to claim 8, **characterised in that** the inner walls of the box form guides for the feed of the air flow, which is generated in the external ventilating unit (12), to the cooling ribs (11).

8. High-pressure ventilator with a motor, which is integrated in a motor housing and which comprises a shaft extending in the longitudinal direction thereof, with two impellers seated on the shaft and connected with the ends of the motor housing, **characterised in that** guide means for lateral loading by a coolant are provided at the circumferential surface of the motor housing (2) to extend in radial direction, wherein the guide means are formed by cooling helices, which extend at the circumferential surface, for guidance of a liquid as coolant.

9. High-pressure ventilator according to claim 8, **characterised in that** the liquid forming the coolant is water.

10. High-pressure ventilator according one of claims 8 and 9, **characterised in that** the circumferential surface of the motor housing (2) forms the inner wall of a double pipe.

11. High-pressure ventilator according to claim 10, **characterised in that** an inlet and outlet for the liquid are provided in the outer wall of the double pipe.

12. High-pressure ventilator according to any one of claims 1 to 11, **characterised in that** the impellers are integrated in impeller housings (3a, b), the integrated housings being flange-mounted at an end of the motor housing (2).

13. High-pressure ventilator according to claim 12, **characterised in that** the impeller housings (3a, b) each have an air inlet (4a, b) and an air outlet (5a, b).

14. High-pressure ventilator according to claim 13, **characterised in that** the impeller housings (3a, b) together with the impellers respectively have identical construction.

15. High-pressure ventilator according to any one of claims 1 to 14, **characterised in that** the motor is constructed as an electric motor.

16. High-pressure ventilator according to claim 15, **characterised in that** a strip plug (6) is provided at the motor housing (2) for the electrical connection of the motor.

## Revendications

1. Ventilateur à haute pression, équipé d'un moteur intégré dans un carter et muni d'un arbre s'étendant dans la direction longitudinale dudit moteur, comportant deux roues en mouvement calées sur ledit arbre et se rattachant aux faces extrêmes dudit carter du moteur, **caractérisé par le fait que** des moyens de guidage d'un fluide de refroidissement, prévus sur la surface de l'enveloppe du carter (2) du moteur et s'étendant dans le sens radial, sont sollicités, par le biais d'une unité (12) de ventilation extérieure se rattachant latéralement audit carter (2) du moteur, par de l'air agissant en tant que fluide de refroidissement.

2. Ventilateur à haute pression selon la revendication 1, **caractérisé par le fait que** l'unité (12) de ventilation extérieure est réalisée sous la forme d'une soufflerie à écoulement transversal.

3. Ventilateur à haute pression selon l'une des revendications 1 ou 2, **caractérisé par le fait qu'**une tôle (13) de guidage d'air est prévue pour faire affluer de l'air sur les ailettes de refroidissement (11), à partir de l'unité (12) de ventilation extérieure.

4. Ventilateur à haute pression selon la revendication 3, **caractérisé par le fait que** la tôle (13) de guidage d'air est verrouillée à demeure sur l'unité (12) de ventilation extérieure.

5. Ventilateur à haute pression selon l'une des revendications 3 ou 4, **caractérisé par le fait que** la tôle (13) de guidage d'air est située à distance constante de la surface de l'enveloppe du carter (2) du moteur, sur un segment de ladite surface.

6. Ventilateur à haute pression selon la revendication 1, **caractérisé par le fait que** le carter (2) du moteur est intégré dans un caisson acoustiquement isolant, conjointement aux roues en mouvement, l'unité (12) de ventilation extérieure étant logée dans un orifice latéral dudit caisson.

7. Ventilateur à haute pression selon la revendication 6, **caractérisé par le fait que** les parois intérieures du caisson forment des guides destinés à faire affluer, sur les ailettes de refroidissement (11), le courant d'air engendré dans l'unité (12) de ventilation extérieure.

8. Ventilateur à haute pression, équipé d'un moteur intégré dans un carter et muni d'un arbre s'étendant dans la direction longitudinale dudit moteur, comportant deux roues en mouvement calées sur ledit arbre et se rattachant aux faces extrêmes dudit carter du moteur, **caractérisé par le fait que** des moyens de guidage, s'étendant dans le sens radial sur la surface de l'enveloppe du carter (2) du moteur, sont prévus pour une sollicitation latérale à l'aide d'un fluide de refroidissement, lesdits moyens de guidage étant formés par des volutes de refroidissement s'étendant sur ladite surface de l'enveloppe, en vue du guidage d'un liquide agissant en tant que fluide de refroidissement.

9. Ventilateur à haute pression selon la revendication 8, **caractérisé par le fait que** le liquide, constituant le fluide de refroidissement, consiste en de l'eau.

10. Ventilateur à haute pression selon l'une des revendications 8 ou 9, **caractérisé par le fait que** la surface de l'enveloppe du carter (2) du moteur matérialise la paroi intérieure d'une tubulure double.

11. Ventilateur à haute pression selon la revendication 10, **caractérisé par le fait qu'**une admission et une sortie, destinées au liquide, sont prévues dans la paroi extérieure de la tubulure double.

12. Ventilateur à haute pression selon l'une des revendications 1 à 11, **caractérisé par le fait que** les roues en mouvement sont intégrées dans un carter (3a, b) rapporté, par bridage, sur une face extrême du carter (2) du moteur.

13. Ventilateur à haute pression selon la revendication 12, **caractérisé par le fait que** les carters (3a, b) des roues en mouvement sont dotés, respectivement, d'une admission d'air (4a, b) et d'une sortie d'air (5a, b).

14. Ventilateur à haute pression selon la revendication 13, **caractérisé par le fait que** les carters (3a, b) des roues en mouvement offrent, à chaque fois, un agencement structurel identique avec lesdites roues en mouvement.

15. Ventilateur à haute pression selon l'une des revendications 1 à 14, **caractérisé par le fait que** le moteur est réalisé sous la forme d'un moteur électrique.

16. Ventilateur à haute pression selon la revendication 15, **caractérisé par le fait qu'**un connecteur de puissance (6) est prévu pour le raccordement électrique du moteur au carter (2) dudit moteur.
